# EUROPEAN PATENT SPECIFICATION

(11) **EP 1 531 971 B1**
(45) Date of publication and mention of the grant of the patent: **28.10.2009**
(21) Application number: 03792415.6
(22) Date of filing: 22.08.2003
(51) Int. Cl.: B25B 23/14, G01L 3/10, H02K 35/02

(54) **TORQUE SENSOR ADAPTOR**
AUF MAGNETISCHER WIRKUNG BERUHENDER DREHMOMENT-SENSOR ADAPTER
ADAPTATEUR A CAPTEUR DE COUPLE

(30) Priority: 23.08.2002 GB 0219745
(43) Date of publication of application: 25.05.2005
(73) Proprietor: ABAS Incorporated, Chicago, IL 60706 (US)
(72) Inventor: KELLY, David,c/o Fast Technology AG, 85521 Ottobrunn (DE); MAY, Lutz, Axel, 82538 Gelting (DE)
(74) Representative: Maiwald Patentanwalts GmbH
(86) International application number: PCT/EP2003/009349
(87) International publication number: WO 2004/018153

(56) References cited:
- EP-A- 0 911 119
- DE-A- 19 638 191
- DE-C- 10 217 416
- US-A- 3 448 305
- US-A- 4 918 997
- US-A- 5 315 501
- US-A- 5 898 379
- US-A- 5 975 714
- US-A- 5 982 059
- US-A1- 2002 020 538
- US-B1- 6 196 071

## Description

### FIELD OF THE INVENTION

This invention relates to a torque transducer assembly and to a torque transducer incorporating such an assembly. The invention has particular application to measuring torque in a fastening tool in which torque is generated in pulses and to measuring torque in an adaptor mountable to a pulsed-torque type of fastening tool.

### BACKGROUND TO THE INVENTION

Considerable attention has been given In recent times to measuring the torque-generated in pulsed torque tools and controlling operation of the tool to achieve a pre-deteffnined torque. Such tools may be sometimes referred to as powered torque wrenches. They have been long used for applying a tightening torque to fasten nuts to bolts, or similar operations.

Pulsed torque tools include two categories. One in which an impact generates a torque impulse, such as rotary hammer and anvil mechanisms: the other in which a pulse of controlled characteristics is generated, such as by a pressure pulse generated with the aid of a piston and cylinder mechanism. In both cases, a train of successive torque pulses is generated to produce increasing torque on the load being tightened. Impact-type tools may be electrically or pneumatically driven (e.g. compressed air). Pressure pulse-type tools may be hydraulically driven (e.g. oil) or electrically driven. The torque pulses are generated at one end of an output shaft and are transmitted to an adaptor at the other end configured to fit the load such as a nut or bolt head.

The control of a power impact tool using a torque transducer is described in published U.S. patent application US2002l0020538A1. The torque transducer uses a ferromagnetic sensor and specifically discloses a magneto-elastic ring coupled to the output shaft of the tool. An impact tool control method and apparatus is described in International patent application publication WO01/44776. The control system uses a magneto-elastic torque transducer mounted exteriorly of the tool in which the magneto-elastic transducer element is an integral portion of a shaft through which torque is transmitted. This document also discloses the implementation of the control system as a retrofit system for use In controlling an existing impact tool.

PCT patent application PCT/EP02/06960 filed 24th June. 2002 discloses the control of a pulsed torque tool using magnetic-based torque transducer which has a transducer element or region integral with the output shaft of the tool. The control apparatus Including the transducer disclosed in this application is disposed interiorly of the power torque tool.

In EP 0 911 119 there is disclosed a method for determining torque in a screw joint, tightened by a series of repeated torque impulses. The torque transducer assembly is located in a housing, in which an output shaft is connected to the impulse generator. The output shaft further comprises an outer square end for attachment of a tool. Torque measurement is performed by a transducer element, sensor arrangement and means for transferring a torque dependent signal to a process control unit. One end of the shaft is freely accessible (for connection to a tool), and the other end is connected to the impulse generator.

In DE 196 38 191 there is disclosed a torque sensor for rotating moments for connection to inductive half bridges. The torque sensor is located in a housing and detects the torque of a shaft with two accessible ends. The torque dependent signals are transferred to a detection means located outside of the housing.

The present invention arises from addressing the problem of providing an adaptor attachable to a conventional power torque tool of the pulsed-type whereby torque measurement and control can be exercised on the tool. The invention is also concerned with measuring the torque generated on a road by each pulse in order to exercise control of the application of torque to the load and particularly to stop operation of the power tool when a predetermined torque is reached. Another aspect also proposes using the mechanical vibration associated with the operation of a power torque tool to derive electrical energy for operating circuitry for the measurement and control procedures. This aspect is of more general utility for generating electrical energy from mechanical vibration.

Aspects and features of this invention relating to a torque transducer assembly suitable for use in an adaptor are set forth in Claims 1 to 4 and 9 to 11 following this description The invention also provides a torque transducer as set forth in Claim 5 to 8.

The Invention and its practice will be further described with reference to the accompanying drawings:

### BRIEF DESCRIPTION OF THE DRAWINGS

Fig. 1 shows a diagrammatic view of a torque sensor adaptor kit for a conventional power torque tool In accordance with this invention:
Fig. 2 shows an axial cross-sectional view through an adaptor for use as the torque sensor adaptor shown in Fig. 1;
Fig. 3 shows an axial cross-sectional view through another torque sensor adaptor showing additional mechanical detail;
Fig. 4 illustrates a signal-processing feature employed in the measurement/control unit of Fig. 1;
Fig. 5 shows an axial view through one embodiment of a vibration-powered electrical generator unit; and
Fig. 5a shows the coil of the unit connected with a rectifier for generating a direct voltage output.

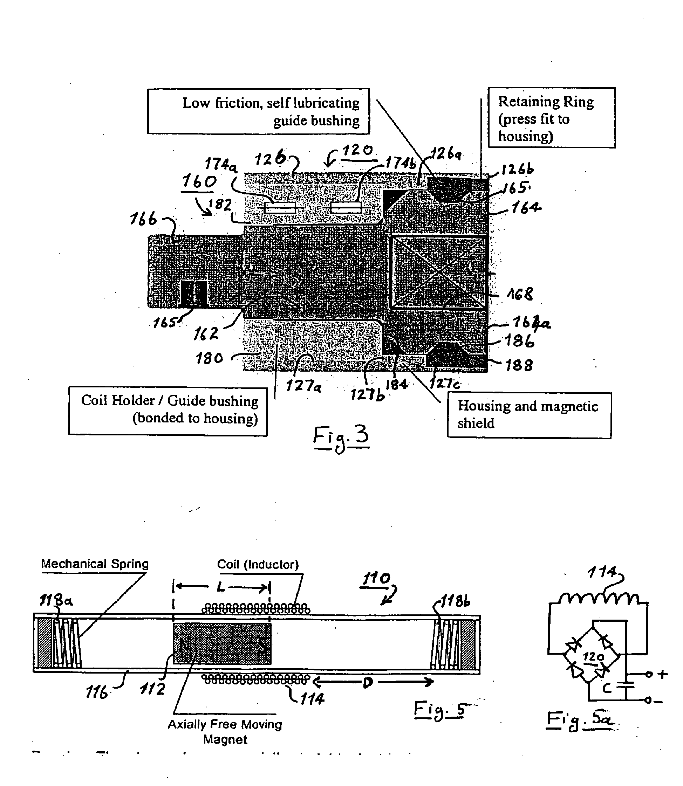

(Figs. 5 and 5a are not according to the present invention.)

### DESCRIPTION OF EMBODIMENT OF ADAPTOR KIT

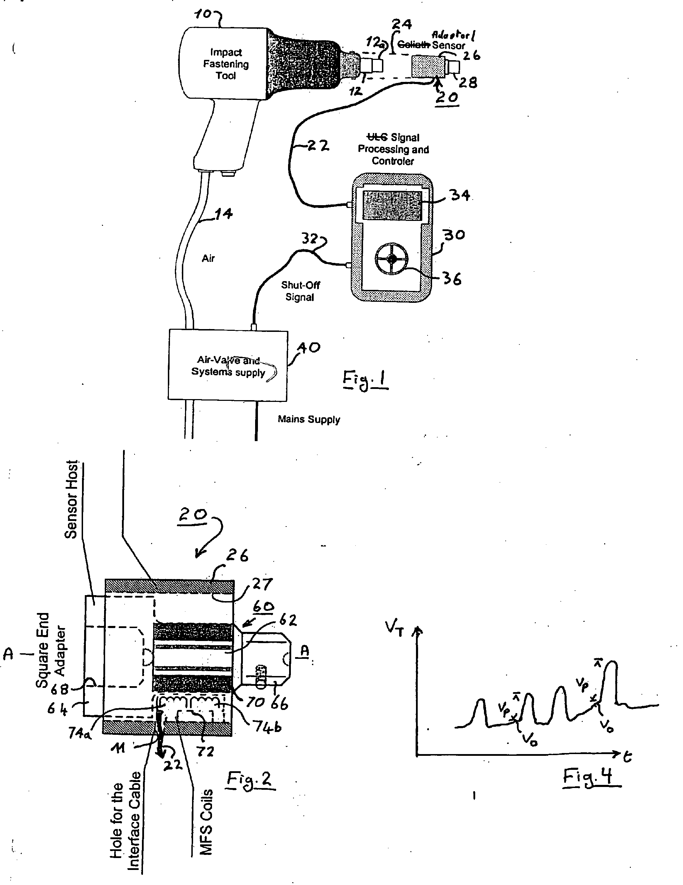

Fig. 1 shows a conventional power torque tool 10, such as an impact-type fastening tool which provides torque pulses at an output shaft 12. The tool illustrated is powered by compressed air through line 14. It is conventional to fit a load-engaging adaptor on the end 12a of the shaft 12 distal the power tool for transmitting torque to the load, e.g. a nut or bolt head. Such an adaptor is exemplified in PCT/EP02/06960. The adaptor is a passive article for transmitting torque from the shaft to the load. As described in PCT/EP02/06960, the disclosure of which is hereby incorporated by reference, torque measurement and control is performed within the tool body 10.

In accordance with one aspect of the present invention a kit including a torque sensor adaptor 20 is provided to enable torque measurement and control to be exercised on a conventional pulsed torque tool not containing such provision. The adaptor 20 couples to the tool output shaft at one end and receives a conventional passive adaptor for engaging a load at the other end. The adaptor incorporates a torque transducer arrangement using a magnetic-based torque transducer element. The adaptor 20 can be characterised as an active device in contrast to prior passive devices In the kit illustrated the torque-dependent signals from the sensor arrangement in adaptor 20 are supplied over cable connection 22 to a signal processing and controller unit 30 which in turn supplies a shut-off signal over cable connection 32 to an air-valve unit 40 acting in line 14. The unit 30 may include a display 34, e.g. an LCD display, for displaying relevant parameters on a manually actuable key pad 36 for entering control instructions and data to a programmed microprocessor (not shown) housed in unit 30. The unit 30 can be mounted or carried so as to be free of the vibration generated in operation of the tool 10. As schematically illustrated by chain lines 24 the adaptor 20 has a body portion 26 which is securable or attachable to the body of the power tool 10 as will be described below. The adaptor has a torque transmitting shaft extending through the body and having an output end 28.

Fig. 2 shows one form of construction for the adaptor 20 which is constructed to transmit torque about an axis A-A. It is a general aim of the construction to keep the axial length of the torque transmitting shaft as short as possible. The adaptor has a housing 26 with an internal circular bore 27 in which is mounted a torque transmitting transducer assembly 60 rotatable within the housing 26 about central axis A-A. Details of support and mounting are shown in Fig. 3

The assembly 60 has a shaft portion 62 disposed between an input portion 64 and an output portion 66 providing the output end 28 of Fig. 1. The input and output roles are reversible but the shaft portions 62 and 64 are shaped in accord with usual power tool practice. The input portion 64 is engaged with to the shaft 12 of tool 10. It is of larger diameter than the shaft portion 62 and includes an axial blind bore 68 configured to fit on the distal end 12a of the tool output shaft 12. For example, if the tool output shaft is of a square cross-section, the bore 68 is of a matching square section. The output portion 66 is shown in this embodiment as a square cross-section shaft similar to the output shaft 12 of the power tool and to which a passive load-engaging adaptor can be fitted. It will be understood that the input and output portions of the assembly 60 can be configured as requited by the tool and the load adaptor respectively; or the output portion 66 could be configured for direct engagement with the load.

The shaft portion 62 is of circular cross-section and is radially-spaced from the adjacent inner surface of housing 26. Shaft portion 62 is magnetised at 70 to provide a torque-sensitive transducer element or region which emanates a torque-dependent magnetic field which is sensed by a sensor arrangement 72.

The region 70 is a region of stored magnetisation. That is, it is remanently magnetised to store a permanent magnetisation. Preferably the magnetisation is an annulus of longitudinal magnetisation about axis A-A. Longitudinal magnetisation is in the direction of axis A-A. The longitudinal magnetisation may be of the kind known as circumferential sensing as disclosed in WO01/13081 or, preferably, of the kind known as profile-shift (axial or radial sensing) as disclosed in WO01/79801. Another torque measuring technique which does not require a region of stored magnetisation is that disclosed in British patent application GB 0204213.3 filed 22nd February, 2002. In this technique the transducer element is not a previously magnetised or (encoded) region of the shaft but is a defined region in which the torque-sensitive element is established in use.

The magnetic field sensor arrangement is disposed in the space between the portion 62 and the adjacent interior surface 27 of housing 26. As will become more apparent from the adaptor of Fig. 3, the space preferably houses a ring of material in which the sensor arrangement is embedded and a portion of which provides a bearing supporting shaft portion 62. Various magnetic field sensor devices are known in the art, e.g. Hall effect and magnetoresistive, but a preferred sensor device is a saturating-core inductor device, particularly a saturating-core device or devices connected in a signal conditioning and processing circuit (SCSP) of the kind described in WO98152063. The complete sensor circuit arrangement is mounted to housing 26 within bore 27. The signal output cable 22 (Fig. 1) exists through the aperture 11. The sensor device(s) and the associated SCSP are not in contact with the shaft.

By way of example, Fig. 2 illustrates the SCSP 72 as including two saturating core sensor devices (MFS) 74a, 74b. As is described in WO01113081 and WO01/79801, two devices connected in series in an SCSP circuit can be employed to additively combine torque-dependent components of the field emanated by region 70 while cancelling out a common component such as the Earth's magnetic field or an interfering component associated with power tool at the workpiece to which torque is applied. The placement and orientation of the sensor inductors is dependent on the torque-dependent component to be sensed.

The signal outputted on cable 22 Is a train of pulses corresponding to the successive impacts th the power tool or other apparatus generating pulses : of torque. Each pulse of the output train has an amplitude and duration representing the torque attained and the time over which the torque acts to turn or attempt to turn the load. The train of torque-representing pulses are processed by the programmed microprocessor in unit 30 to determine at which point a pre-set torque is reached. The pre-set value is input by keypad 36. Proposals for determination of the torque achieved are discussed in U.S. 2002/002050538 A1 and WO01/44776. More detailed information on the generation of torque over a successive number of pulses and its measurement is disclosed in PCT/EP02/06960.

On attaining a desired measured torque the microprocessor in unit 30 outputs a signal on cable 32 to actuate an air-valve controller 40 to shut-off the air or other power supply to the power torque tool 10.

In an alternative arrangement the SCSP circuit is included in unit 30 so that only the MFS devices are included within the adaptor and connected into the SCSP through the cable 22.

In implementing torque measurement using the adaptor described it has been found beneficial to make a measurement for each torque pulse signal which is referenced to the quiescent level of the signal output from SCSP 72. This enables drift in the output of the SCSP to be disregarded. Fig. 4 shows the output voltage V_{T} of the SCSP over a number of pulses at which the quiescent level Vo drifts (the drift is exaggerated). The pulse amplitude V_{P} should be measured with respect to the quiescent level. Pulse detection and measurement is preferably done using a sampling technique enabling up to, say, 20 samples to be taken during the period of a pulse. Investigation to date has revealed that the external active adaptor now proposed is likely to be more subject to interfering magnetic fields originating outside the power tool than a power tool in which magnetic-based torque measurement is made internally. On the other hand, measurement drifts and variations due to part tolerances are likely to be better in the external adaptor than with a magnetic-based torque transducer within the power tool.

It Is recognised that the active torque sensor device may have a limited life expectancy. It is used in a hostile environment. In addition to the inherently vibratory nature of a power pulse torque tool, additional mechanical stresses arise In the way the tool is applied to fasten a wheel nut. The angle of the tool to the next axis varies, the stiffness of the nut on the engaged thread is another variable and the power tool may run at a very high speed if operated under no-load conditions. One additional feature that can be provided in the unit 30 is to count the number of torque pulses detected and processed as a measure of the use of the adaptor. An indicator can be displayed on the display screen 34 when a predetermined number of pulses have been recorded.

Turning now to Fig. 3, the torque sensor adaptor 120 performs and operates in the same manner as that of Fig. 2 and those details of the sensor assembly will not be repeated. Fig. 3 shows additional details of one embodiment of the mechanical structure of the active adaptor. Features like or similar to those of Fig. 2 bear the same reference numerals increased by 100.

In Fig. 3, the rotatable transducer shaft assembly 160 comprises an input portion 164, a transducer region 162 (the stored magnetisation is not illustrated), and an output portion 166. The assembly is rotatably mounted in housing 126. The output portion of square cross section includes recess 165 for co-operating with a standard passive adaptor. The transducer region 162 is located for rotation within the housing by a plain bearing provided by an annular bush 180 of a plastics material which is bonded to or otherwise secured against rotation to a forward (i.e. toward the output end) inside surface 127a of the housing 126. The interior diameter of bush 180 is slightly greater than the diameter of region 162, other than for a forward lip 182 which bears against the shaft. The bush 180 has the sensor devices 174a, 174b embedded within it. In the construction of Fig. 3 it is assumed that the SCSP circuit is external to the adaptor in the unit 30 of Fig. 1. The cable exit hole is not shown.

The rearward end of bush 180 seats against an internal step 127b of housing 126 and also provides an abutment 184 for axially locating the transducer assembly and specifically a forward surface of the enlarged input portions 164. The input portion is sized to rotate freely within a part 126a of the housing of reduced internal diameter extending from step 127b to a rearward internal step 127c. Step 127c lies adjacent a circumferential groove 165 in the input portion 164. An annular bushing 186 of a low friction, self-lubricating material is received in the groove and engages the interior surface of housing 126 and is axially located by step 127c. The bushing 186, and therewith the transducer assembly 160 is retained in the housing by an intemally-located press-fit retaining ring 188 at the rear of the housing. The housing 126 not only provides mechanical support and protection but provides a magnetic shield for the transducer assembly. It will be understood that the construction illustrated in Fig. 3 is diagrammatic in nature.

One feature of the assembly 160 of Fig. 3 which differs from that of assembly 60 of Fig. 2 is that the input portion 164 terminates at 164a flush with the rearward end 126b of the housing 126 or within the axial confines of the housing which is in accord with the desire to keep the overall length of the active adaptor as small as possible. The square-section bore 168 for engaging the output shaft of the power tool is contained within the housing. The assembly 160 is a push fit into the housing 126 from its rearward end.

To perform the function generally indicated at 24 in Fig. 1 of preventing rotation of the adaptor housing and to retain the output shaft of the power tool engaged within the bore 168, the exterior of housing 126 is adapted to retain one end of a stiff helical spring (or more than one such spring) the other end of which is retained on the housing of the power tool. The spring, thus retained, is in an axially stretched state (in tension) so that the tension maintains the active adaptor engaged with the power tool. It has also been found that the flexibility of the retaining spring enables the power tool fitted with the active adaptor to accommodate the variations in the angle between the torque axis and the load being fastened that occur in practical use of the tool. It will be understood the plain bearing type of rotary support provided by bush 180 and bushing 186 could be substituted by other means of bearing support.

If a cable 22 is used the cable can be secured to the power tool body. The unit 30 can be mounted anywhere convenient, e.g. on the airline 14 or the valve unit 40. There is advantage in using a wire-tess link (free of wire connection) from the active adaptor.

The operation of the kit described requires electrical power to be available to operate the SCSP in the adaptor 20 and the electronics in unit 30. While such power can be derived from any source, it is preferred to make the kit fittable to any power torque tool without any special electrical power connection requiring to be made other than for the air valve control unit 40 which becomes part of the energy supply (air or otherwise) for the tool.

To this end the unit 30 may be battery powered and power to the SCSP in adaptor 20 supplied through the cable 22. To at least support the internal battery supply, it is now proposed to provide a means for electrical power generation which draws its energy from the mechanical vibration of the power torque tool. Such a source would be of particular benefit where the active adaptor 20, 120 does not use any form of cable communication to unit 30. Both from the point of view of compactness and of reliability of operation in an environment of high vibration, avoidance of a battery supply at the adaptor is desirable.

### DESCRIPTION OF ELECTRICAL POWER GENERATOR

A vibration-to-electrical power generator will now be described with reference to Figs. 5 and 5a (not according to the present invention).

Fig. 5 shows a generator 110 in which a magnet 112 is disposed to be freely movable along the axis of a helical coil 114 shown as a two-layer winding. The coil may be pile wound In any fashion. The axial movement of the magnet 112 and the magnet flux field associated with it generates an electromotive force (e.m.f.) in the coil as the field lines cut the coil to transform the kinetic mechanical energy of the magnet into electrical energy.

The movement of the magnet is constrained by disposing it within a cylindrical tube 116 around which the coil 114 is wound and the extent of movement is limited by stops. The magnet vibrates axially within the tube in sympathy with the vibration of a mechanical device, such as a power tool to which the tube 116 is mounted. To enhance the to-and-fro vibration of the magnet 112, at least one of the tube ends is closed by a resilient stop device, such as a spring, against which the magnet bounces or recoils when it strikes the device. Preferably each end of the tube is closed in similar manner as indicated by resilient devices 118a and 118b. The tube is of a "slippery" plastics to provide low friction for the axial vibration of the magnet. Polytetrafluoroethylene (PTFE) is an example.

The magnet 112 is a bar-type of permanent magnet and preferably of relatively high length (L) to diameter or width ratio to reduce its self-demagnetisation. The coil is of about the same length L as the magnet and the resilient devices 118a and 118b are spaced at a distance D from the respective nearer end of the coil to allow the magnet to fully emerge from the coil. D is preferably at least 50% of L.

The springs or other resilient devices 118a and 118b not only serve to retain the magnet 112 in the tube 116 but also to cushion the magnet against violent shock. Furthermore, the assembly may be designed to have a resonance at a frequency of the vibrating source so as to enhance the transfer of vibration of the source into vibrations of the magnet.

The vibration of the magnet 112 within coil 114 generates voltage of both polarities at a given end of the coil with respect to the other. As shown in Fig. 5a the coil 114 may be connected into a full-wave rectifier bridge 120 to generate a single polarity of voltage/current output used, for example, to charge a smoothing/storage capacitor C.

The physical size of the generator of Fig. 5 is presently contemplated as ranging from a magnet which is a piece of magnetised wire disposed within a tube the size of a drinking straw - certain of the many such straws are of a sufficiently "slippery" material - to a magnet fitting a tube of 1 cm diameter or more.

The generator embodiment of Fig. 5 utilizes a straight tube. The embodiment could be realised in an arcuate or other curved form. Other forms of reciprocal movement along a predetermined path between prescribed limits include a magnet constrained to move In an arcuate path about an axis.

As already stated the signal communication from the adaptor 20 to the processing unit could be done by a wire-less method, such as an IR link, rather than through the cable 22. As described the cable 22 allows power to be distributed from the unit 30 to adaptor 22 or vice versa or a combination of the two. To avoid use of the cable altogether requires the adaptor 20 and unit 30 to have separate sources of power in which case the generator of Fig. 5 may be sufficient to fully power adaptor 20.

## Claims

1. A torque transducer assembly (20, 120) comprising:
a housing (26, 126) having an opening therethrough;
a torque transmission shaft (60, 160) extending in said opening and rotatable about an axis extending through said opening, said shaft (60, 160) having respective end portions (64, 164, 66, 166) accessible from exteriorly of said housing (26, 126),
a torque transducer element (70) integral with, or carried by, said shaft (60, 160) to emanate a magnetic field dependent on the torque in the shaft (60, 160),
a magnetic field sensor arrangement (72) located within said housing (26, 126) adjacent said element (70) for sensing the torque-dependent field, said sensor arrangement (72) being operable to provide a torque-dependent signal; and means for communicating said torque-dependent signal to a signal externally of the assembly;
a helical spring having a first portion engaged with the housing (26, 126) and a second portion engageable with the body of a power torque tool (10) to secure the housing (26, 126) against rotation with respect to said body.

2. A torque transducer assembly (20, 120) as claimed in Claim 1 in which one end portion of said shaft (60, 160) projects exteriorly of said housing (26, 126) and provides an output portion (66, 166) of the shaft (60, 160).

3. A torque transducer assembly (20, 120) as claimed in any one of Claims 1 to 2 in which said magnetic field sensor arrangement (72) comprises at least one magnetic field sensor device (74, 174).

4. A torque transducer assembly (20, 120) as claimed in Claim 3 in which said magnetic field sensor arrangement (72) further comprises a circuit into which the magnetic field sensor device (74, 174) is connected, the circuit and magnetic field sensor device(s) (74, 174) being supported by said housing (26, 126), the circuit being operable to output signals representing torque through the means for communicating.

5. A torque transducer comprising a torque transducer assembly (20, 120) which is as claimed in any one of Claims 1 to 4 and a signal processing unit (30) in communication with said torque transducer assembly (20, 120) for processing said torque-dependent signals, wherein said signal processing unit (30) is operable to process pulse signals representing pulses of torque and is responsive to the amplitude of each pulse signal with reference to the quiescent signal level on which it is imposed.

6. A torque transducer as claimed in Claim 4 or 5 wherein the means for communication utilizes a wire-less form of communication.

7. A torque transducer comprising a torque transducer assembly (20, 120) which is as claimed in Claim 5 and a signal processing unit (30) connected to said means for communication by an electrical cable, said signal processing unit (30) comprising a circuit into which the magnetic field sensor device (74, 174) is connected through the cable (22), the circuit being operable to output signals representing sensed torque.

8. A transducer as claimed in Claim 7 in which signal processing unit (30) is operable to process pulse signals representing pulses of torque and is responsive to the amplitude of each pulse signal with reference to the quiescent level on which it is imposed.

9. A torque transducer assembly (120) according to any one of Claims 1 to 4, wherein said torque transmission shaft (160) has a first portion supported in an annular bush (180) secured to the housing (126) and from which first portion an output portion (166) of the shaft (160) projects,
said first portion has said torque transducer element integral therewith, or carried thereby, said magnetic field sensor arrangement embedded in said bush (180) adjacent said element for providing a torque-dependent signal, and wherein said shaft (160) has a second portion distal said output portion (166) and at least partially contained within said opening,
said second portion being of larger cross-section than said first portion and abutting said bush (180),
wherein said torque transducer assembly (120) further comprises first means for locating said second portion to rotate with respect to said housing (126) and second means for applying axial force between the housing (126) and said second portion to maintain same in abutment.

10. A torque transducer assembly (120) as claimed in Claim 9 in which said first means comprises a bushing (186) located in a circumferential groove (165) around said second portion and engaging an inner surface of said opening.

11. A torque transducer as claimed in Claim 10 in which said second means comprises a retainer ring (188) secured in said opening to apply an axial force to said bushing (186).

## Patentansprüche

1. Drehmomentsensorbaugruppe (20, 120), umfassend:
ein Gehäuse (26, 126) mit einer Öffnung durch dieses hindurch;
eine Drehmomentübertragungswelle (60, 160), die sich in der Öffnung erstreckt und um eine sich durch die Öffnung erstreckende Achse drehbar ist, wobei die Welle (60, 160) entsprechende Endabschnitte (64, 164, 66, 166) aufweist, die von außerhalb des Gehäuses (26, 126) zugänglich sind,
ein Drehmomentsensorelement (70), das mit der Welle (60, 160) einstückig ausgebildet oder durch diese getragen wird, um ein Magnetfeld auszustrahlen, das von dem Drehmoment in der Welle (60, 160) abhängig ist,
eine Magnetfeldsensoranordnung (72), die innerhalb des Gehäuses (26, 126) dem Element (70) benachbart zum Detektieren des drehmomentabhängigen Feldes angeordnet ist, wobei die Sensoranordnung (72) betrieben werden kann, um ein drehmomentabhängiges Signal bereitzustellen; und
ein Mittel zum Übertragen des drehmomentabhängigen Signals zu einem Signal außerhalb der Baugruppe;
eine Schraubenfeder mit einem ersten Abschnitt, der mit dem Gehäuse (26, 126) in Eingriff steht, und einem zweiten Abschnitt, der, um das Gehäuse (26, 126) gegen Rotation in Bezug auf den Körper zu fixieren, mit dem Körper eines angetriebenen Drehmomentwerkzeugs (10) in Eingriff gebracht werden kann.

2. Drehmomentsensorbaugruppe (20, 120) nach Anspruch 1, wobei ein Endabschnitt der Welle (60, 160) außerhalb des Gehäuses (26, 126) vorragt und einen Ausgangsabschnitt (66, 166) der Welle (60, 160) darstellt.

3. Drehmomentsensorbaugruppe (20, 120) nach einem beliebigen der Ansprüche 1 bis 2, wobei die Magnetfeldsensoranordnung (72) mindestens eine Magnetfeldsensorvorrichtung (74, 174) umfasst.

4. Drehmomentsensorbaugruppe (20, 120) nach Anspruch 3, wobei die Magnetfeldsensoranordnung (72) ferner eine Schaltung umfasst, an welche die Magnetfeldsensorvorrichtung (74, 174) angeschlossen ist, wobei die Schaltung und die Magnetfeldsensorvorrichtung(en) (74, 174) durch das Gehäuse (26, 126) gelagert sind, wobei die Schaltung betrieben werden kann, um durch das Mittel zum Übertragen Signale auszugeben, welche Drehmoment darstellen.

5. Drehmomentsensor, umfassend eine Drehmomentsensorbaugruppe (20, 120) nach einem beliebigen der Ansprüche 1 bis 4 und eine Signalverarbeitungseinheit (30) in Kommunikation mit der Drehmomentsensorbaugruppe (20, 120) zum Verarbeiten der drehmomentabhängigen Signale, wobei die Signalverarbeitungseinheit (30) betrieben werden kann, um Impulssignale zu verarbeiten, die Drehmomentimpulse darstellen, und auf die Amplitude jedes Impulssignals in Bezug auf den Signalruhepegel, auf den es aufgesetzt wird, anspricht.

6. Drehmomentsensor nach Anspruch 4 oder 5, wobei das Mittel zum Übertragen eine drahtlose Form der Kommunikation verwendet.

7. Drehmomentsensor, umfassend eine Drehmomentsensorbaugruppe (20, 120) nach Anspruch 5 und eine Signalverarbeitungseinheit (30), die durch ein elektrisches Kabel an das Mittel zum Übertragen angeschlossen ist, wobei die Signalverarbeitungseinheit (30) eine Schaltung umfasst, an welche die Magnetfeldsensorvorrichtung (74, 174) durch das Kabel (22) angeschlossen ist, wobei die Schaltung betrieben werden kann, um Signale auszugeben, welche detektiertes Drehmoment darstellen.

8. Sensor nach Anspruch 7, wobei die Signalverarbeitungseinheit (30) betrieben werden kann, um Impulssignale zu verarbeiten, die Drehmomentimpulse darstellen, und auf die Amplitude jedes Impulssignals in Bezug auf den Ruhepegel, auf den es aufgesetzt wird, anspricht.

9. Drehmomentsensorbaugruppe (120) nach einem beliebigen der Ansprüche 1 bis 4, wobei die Drehmomentübertragungswelle (160) einen ersten Abschnitt aufweist, der in einer Ringbuchse (180) gelagert ist, welche an dem Gehäuse (126) befestigt ist, wobei von diesem ersten Abschnitt ein Ausgangsabschnitt (166) der Welle (160) vorragt,
wobei das Drehmomentsensorelement einstückig mit dem ersten Abschnitt ausgebildet ist oder durch diesen getragen wird, wobei die Magnetfeldsensoranordnung dem Element benachbart zum Bereitstellen eines drehmomentabhängigen Signals in die Buchse (180) eingebettet ist, und wobei
die Welle (160) einen zweiten Abschnitt distal von dem Ausgangsabschnitt (166) und mindestens zum Teil in der Öffnung aufgenommen aufweist, wobei der zweite Abschnitt einen größeren Querschnitt als der erste Abschnitt aufweist und an der Buchse (180) anliegt,
wobei die Drehmomentsensorbaugruppe (120) ferner ein erstes Mittel zum Anordnen des zweiten Abschnitts, um sich in Bezug auf das Gehäuse (126) zu drehen, und ein zweites Mittel zum Aufbringen von axialer Kraft zwischen dem Gehäuse (126) und dem zweiten Abschnitt, um denselben in anliegender Beziehung zu halten, umfasst.

10. Drehmomentsensorbaugruppe (120) nach Anspruch 9, wobei das erste Mittel eine Buchse (186) umfasst, die in einer Umfangsrille (165) rund um den zweiten Abschnitt angeordnet ist und mit einer inneren Oberfläche der Öffnung in Eingriff steht.

11. Drehmomentsensor nach Anspruch 10, wobei das zweite Mittel einen Haltering (188) umfasst, der in der Öffnung befestigt ist, um eine axiale Kraft auf die Buchse (186) aufzubringen.

## Revendications

1. Ensemble transducteur de couple (20, 120) comportant :
un boîtier (26, 126) ayant une ouverture à travers celui-ci,
un arbre de transmission de couple (60, 160) s'étendant dans ladite ouverture et pouvant tourner autour d'un axe s'étendant à travers ladite ouverture, ledit arbre (60, 160) ayant des parties d'extrémité respectives (64, 164, 66, 166) accessibles depuis l'extérieur dudit boîtier (26, 126),
un élément transducteur de couple (70) d'un seul tenant avec ledit arbre (60, 160), ou porté par celui-ci, pour produire un champ magnétique dépendant du couple dans l'arbre (60, 160),
un agencement de détection de champ magnétique (72) placé à l'intérieur dudit boîtier (26, 126) adjacent audit élément (70) pour détecter le champ dépendant du couple, ledit agencement détecteur (72) pouvant fonctionner pour délivrer un signal dépendant du couple, et
des moyens pour communiquer ledit signal dépendant du couple à un signal à l'extérieur de l'ensemble,
un ressort hélicoïdal ayant une première partie en contact avec le boîtier (26, 126) et une seconde partie pouvant venir en contact avec le corps d'un outil dynamométrique motorisé (10) pour protéger le boîtier (26, 126) d'une rotation par rapport audit corps.

2. Ensemble transducteur de couple (20, 120) selon la revendication 1, dans lequel une partie d'extrémité dudit arbre (60, 160) fait saillie à l'extérieur dudit boîtier (26, 126) et fournit une partie de sortie (66, 166) de l'arbre (60, 160).

3. Ensemble transducteur de couple (20, 120) selon l'une quelconque des revendications 1 à 2, dans lequel ledit agencement détecteur de champ magnétique (72) comporte au moins un dispositif détecteur de champ magnétique (74, 174).

4. Ensemble transducteur de couple (20, 120) selon la revendication 3, dans lequel ledit agencement détecteur de champ magnétique (72) comporte en outre un circuit dans lequel le dispositif détecteur de champ magnétique (74, 174) est raccordé, le circuit et le dispositif détecteur de champ magnétique (74, 174) étant supportés par ledit boîtier (26, 126), le circuit pouvant fonctionner pour générer des signaux représentant un couple par l'intermédiaire des moyens de communication.

5. Transducteur de couple comportant un ensemble transducteur de couple (20, 120) qui est tel que revendiqué dans l'une quelconque des revendications 1 à 4 et une unité de traitement de signaux (30) en communication avec ledit ensemble transducteur de couple (20, 120) pour traiter lesdits signaux dépendant du couple, dans lequel ladite unité de traitement de signaux (30) peut fonctionner pour traiter des signaux impulsionnels représentant des impulsions de couple et est sensible à l'amplitude de chaque signal impulsionnel en référence au niveau de signal de repos sur lequel il est imposé.

6. Transducteur de couple selon la revendication 4 ou 5, dans lequel les moyens de communication utilisent une forme de communication sans fil.

7. Transducteur de couple comportant un ensemble transducteur de couple (20, 120) qui est tel que revendiqué dans la revendication 5 et une unité de traitement de signaux (30) reliée auxdits moyens de communication par un câble électrique, ladite unité de traitement de signaux (30) comportant un circuit dans lequel le dispositif détecteur de champ magnétique (74, 174) est raccordé par l'intermédiaire du câble (22), le circuit pouvant fonctionner pour générer des signaux représentant un couple détecté.

8. Transducteur selon la revendication 7, dans lequel l'unité de traitement de signaux (30) peut fonctionner pour traiter des signaux impulsionnels représentant des impulsions de couple et est sensible à l'amplitude de chaque signal impulsionnel en référence au niveau de repos sur lequel il est imposé.

9. Ensemble transducteur de couple (120) selon l'une quelconque des revendications 1 à 4, dans lequel ledit arbre de transmission de couple (160) a une première partie supportée dans une douille annulaire (180) fixée au boîtier (126) et depuis laquelle une partie de sortie (166) de la première partie de l'arbre (160) fait saillie,
ladite première partie a ledit élément transducteur de couple d'un seul tenant avec celle-ci, ou porté par celle-ci, ledit agencement détecteur de champ magnétique intégré dans ladite douille (180) adjacente audit élément pour générer un signal dépendant du couple, et dans lequel
ledit arbre (160) a une seconde partie distale à ladite partie de sortie (166) et au moins partiellement contenue à l'intérieur de ladite ouverture,
ladite seconde partie ayant une section transversale plus grande que ladite première partie et venant en butée contre ladite douille (180),
dans lequel ledit ensemble transducteur de couple (120) comporte en outre des premiers moyens pour positionner ladite seconde partie afin de tourner par rapport audit boîtier (126) et des seconds moyens pour appliquer une force axiale entre le boîtier (126) et ladite seconde partie afin de maintenir celle-ci en butée.

10. Ensemble transducteur de couple (120) selon la revendication 9, dans lequel lesdits premiers moyens comportent une douille (186) positionnée dans une gorge circonférentielle (165) autour de ladite seconde partie et en contact avec une surface intérieure de ladite ouverture.

11. Transducteur de couple selon la revendication 10, dans lequel lesdits seconds moyens comportent une bague de retenue (188) fixée dans ladite ouverture pour appliquer une force axiale à ladite douille (186).
